(19) Europäisches Patentamt

European Patent Office

Office européen des brevets

(11) **EP 4 131 586 A1**

(12) **EUROPEAN PATENT APPLICATION**
published in accordance with Art. 153(4) EPC

(43) Date of publication:
08.02.2023 Bulletin 2023/06

(21) Application number: 20928459.5

(22) Date of filing: 31.03.2020

(51) International Patent Classification (IPC):
**H01M 50/10** (2021.01)

(52) Cooperative Patent Classification (CPC):
**H01M 50/105; H01M 50/129; H01M 50/342;
H01M 50/383;** Y02E 60/10

(86) International application number:
**PCT/CN2020/082540**

(87) International publication number:
**WO 2021/196000 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **YAN, Dongyang
Ningde, Fujian 352100 (CN)**
• **ZENG, Qiao
Ningde, Fujian 352100 (CN)**
• **XIAO, Liangzhen
Ningde, Fujian 352100 (CN)**

(74) Representative: **Klunker IP
Patentanwälte PartG mbB
Destouchesstraße 68
80796 München (DE)**

(54) **BATTERY CELL, BATTERY, AND ELECTRONIC DEVICE**

(57) A battery cell includes an electrode assembly and a packaging bag accommodating the electrode assembly, where the packaging bag includes a sealing portion, and the electrode assembly includes a first tab and a second tab. The sealing portion includes first regions and a second region. The first tab and the second tab at least partly protrude from the first regions, where a packaging strength of the first regions is S 1, and a width of the first regions is W1 in a length direction of the battery cell; and the second region is connected to the first regions, a packaging strength of the second region is S2, and a width of the second region is W2 in the length direction of the battery cell. S1, W1, S2, and W2 satisfy the following relationship:

$$\frac{W2}{W1} \times S1 \leq S2 \leq \frac{W1}{W2} \times 3S1$$

FIG. 1

## Description

### TECHNICAL FIELD

This application relates to an energy storage apparatus, and in particular, to a battery cell, a battery containing such battery cell, and an electronic device containing such battery.

### BACKGROUND

As battery cells have constantly higher energy density and service voltage, they are likely to reach increasingly high temperature in charging. With continued temperature rise, safety performance of the cells is gradually degraded. Specifically, battery cells are likely to produce unexpected heat under extremely high temperature, and such unexpected heat may possibly give rise to fire, explosion, and other incidents.

In the prior art, to avoid production of a large amount of heat, a usual practice is to replace the cathode material, anode material, and electrolyte (for example, with materials of better thermal stability). However, material replacement may not only increase costs but also impair other performance of the battery cells. For example, although cathode and anode materials of better thermal stability improve safety performance of the battery cells, they are likely to reduce energy density of the battery cells and impair their quick-charge performance.

Therefore, it is an important subject to be studied how safety performance under high temperature can be improved for battery cells without affecting their other performance, especially how heat dissipation can be improved for battery cells during charging.

### SUMMARY

This application is intended to resolve at least one of the technical problems in the prior art, and provides a battery cell with good heat dissipation and high safety performance under high temperature. This application further provides a battery containing such battery cell and an electronic device containing such battery.

The battery cell provided according to embodiments of this application includes an electrode assembly and a packaging bag accommodating the electrode assembly, where the packaging bag includes a sealing portion, and the electrode assembly includes a first tab and a second tab. The sealing portion includes first regions and a second region. The first tab and the second tab at least partly protrude from the first regions, where a packaging strength of the first regions is S1, a width of the first regions is W1 in a length direction of the battery cell; the second region is connected to the first regions, a packaging strength of the second region is S2, and a width of the second region is W2 in the length

$$\frac{W2}{W1} \times S1 \leq S2 \leq \frac{W1}{W2} \times 3S1$$

direction of the battery cell. S1, W1, S2, and W2 satisfy the following relationship: .

Preferably, S1, S2, and W1 are in the following ranges: 0.5N/m<S1<10N/m, 0.8S1≤S2≤3.4S1, and 1.5mm<W1<3.0mm.

In an embodiment of this application, the packaging bag includes a first packaging film and a second packaging film, where the first packaging film includes a first fusion layer, and the second packaging film includes a second fusion layer disposed opposite to the first fusion layer, and the first fusion layer and the second fusion layer are sealed together to form the sealing portion and an accommodating space for accommodating the electrode assembly. The first fusion layer and the second fusion layer may be hot-pressed sealing material layers.

In the foregoing embodiment of this application, the electrode assembly further includes a first adhesive layer opposite to the first fusion layer and a second adhesive layer opposite to the second fusion layer. The first tab is disposed between the first adhesive layer and the second adhesive layer, and the first adhesive layer and the second adhesive layer are disposed between the first fusion layer and the second fusion layer to form the first regions where the first tab protrudes from.

In addition, in the foregoing embodiment of this application, the electrode assembly further includes a third adhesive layer opposite to the first fusion layer and a fourth adhesive layer opposite to the second fusion layer; the second tab is disposed between the third adhesive layer and the fourth adhesive layer, and the third adhesive layer and the fourth adhesive layer are disposed between the first fusion layer and the second fusion layer to form the first regions where the second tab protrudes from.

In the embodiments of this application, the second adhesive layer, the third adhesive layer, the fourth adhesive layer, and the first adhesive layer may have a same structure and material, or certainly, may have different structures and materials. The following describes the first adhesive layer as an example.

In an embodiment, the first adhesive layer is a single-layer structure, and a melting point thereof is 100°C to 150°C. For example, the first adhesive layer may be a hot-pressed sealing material layer.

In another embodiment, the first adhesive layer is a double-layer structure which includes: a first layer opposite to the first fusion layer, where a melting point of the first layer is 100°C to 170°C; and a second layer opposite to the first tab, where a melting point of the second layer is 105°C to 145°C.

In a still another embodiment, the first adhesive layer is a three-layer structure which includes: a first layer opposite to the first fusion layer, where a melting point of the first layer is 100°C to 170°C; a second layer opposite to the first tab, where a melting point of the second layer is 100°C to 170°C; and a third layer disposed between the first layer and the second layer, where a melting point of the third layer is 200°C to 300°C.

The structures of the first adhesive layer are also applicable to the second adhesive layer, the third adhesive layer, and the fourth adhesive layer. This means that in the embodiments, the second adhesive layer, the third adhesive layer, and the fourth adhesive layer may also have any one of the foregoing structures.

In the embodiments of this application, the second packaging film and the first packaging film have a same structure. The following describes the first packaging film as an example.

As previously mentioned, the first packaging film includes the first fusion layer. In the embodiments of this application, the first fusion layer has a melting point of 105°C to 165°C, and may be made of a hot-pressed sealing material.

In an embodiment of this application, the first packaging film is a three-layer structure which further includes a barrier material layer and a metal layer clamped between the barrier material layer and the first fusion layer.

In another embodiment of this application, the first packaging film is a four-layer structure which further includes two barrier material layers that are stacked and a metal layer clamped between one of the barrier material layers and the first fusion layer.

In still another embodiment of this application, the first packaging film is a five-layer structure which includes the first fusion layer, a first bonding layer, a metal layer, a second bonding layer, and a barrier material layer sequentially from the inside outward.

In yet another embodiment of this application, the first packaging film is a six-layer structure which includes the first fusion layer, a metal layer, a first bonding layer, a first barrier material layer, a second bonding layer, and a second barrier material layer sequentially from the inside outward.

The structures of the first packaging layer are also applicable to the second packaging layer. This means that in the embodiments, the second packaging layer may also have any one of the foregoing structures.

The embodiments of this application further provide a battery which includes the battery cell described in any one of the foregoing embodiments.

In addition, the embodiments of this application further provide an electronic device which includes a battery and a housing for accommodating the battery, where the battery includes the battery cell described in any one of the foregoing embodiments.

Compared with the prior art, the battery cell provided according to this application has the following excellent technical effects:

Different regions of the sealing portion of the battery cell are obviously different in packaging strength (to be specific, the packaging strength S 1 and width W1 of the first regions where the first tab and the second tab protrude from and the packaging strength S2 and width W2 of the other region (second region) of the sealing portion satisfy the

relationship: $\frac{W2}{W1} \times S1 \le S2 \le \frac{W1}{W2} \times 3S1$ ), so that impact produced by gas pressure inside the battery cell which swells under high temperature strikes the regions of weaker packaging strength (first regions) of the sealing portion more heavily. As a result, these regions open earlier when they are not able to withstand the heavier gas pressure, allowing heat to dissipate effectively therefrom. In other words, because the tab regions (first regions) and non-tab region (second region) of the sealing portion of the battery cell are designed with non-uniform packaging strength, the regions with weaker packaging strength of the battery cell open earlier under high temperature, so that heat produced by the battery cell can quickly and effectively dissipate by virtue of these regions. It is no doubt that this would make the battery cell less likely to have dangers such as fire and explosion resulting from heat accumulation, thus greatly improving safety performance of the battery cell under high temperature.

## BRIEF DESCRIPTION OF DRAWINGS

To help better understand specific embodiments and excellent technical effects of this application more clearly, the following describes the embodiments of this application in detail with reference to the accompanying drawings.

FIG. 1 is a schematic front view of a battery cell according to this application, schematically illustrating a front-view structure of the battery cell;
FIG. 2 is a schematic top view of the battery cell shown in FIG. 1, schematically illustrating a top-view cross section structure of the battery cell;

FIG. 3A is a local enlarged view of a position F of the battery cell shown in FIG. 2, illustrating a local structure of a first region a on the left side (region where a first tab protrudes from), where the region is not open;

FIG. 3B also illustrates a local structure of the first region a, which is the same as FIG. 3A except that the region is open in one way (where a first adhesive layer and a second adhesive layer are pushed apart to form an opening);

FIG. 3C also illustrates a structure of the first region a in an open state, which is the same as FIG. 3B except for a different way of opening (where a second fusion layer and the second adhesive layer are pushed apart to form an opening);

FIG. 4A is a local enlarged view of a position G of the battery cell shown in FIG. 2, illustrating a local structure of a second region b (region where no tab protrudes from) of the sealing portion of the battery cell, where the region is not open;

FIG. 4B also illustrates a local structure of the second region b, which is the same as FIG. 4A except that the region is open in one way (where a first fusion layer A and a second fusion layer A' are pushed apart to form an opening);

FIG. 4C also illustrates a structure of the second region b in an open state, which is the same as FIG. 4B except for a different way of opening (where the second fusion layer A' is pushed to form an opening at a side close to a metal layer D;

FIGS. 5A-5C are cross-sectional views of a first adhesive layer, illustrating the first adhesive layer as single-layer, double-layer, and three-layer structures, respectively; and

FIGS. 6A-6D are cross-sectional views of a first packaging film, illustrating the first packaging film as three-layer, four-layer, five-layer, and six-layer structures, respectively.

## DETAILED DESCRIPTION

The following describes embodiments of this application in detail with reference to the accompanying drawings. The aspects of this application can be more easily understood by reading the descriptions of the following embodiments with reference to the accompanying drawings. It should be noted that these embodiments are merely exemplary, only intended to explain technical solutions of this application rather than to limit it. Persons skilled in the art can make various modifications and replacements based on these embodiments, but all technical solutions obtained by equivalent replacements fall within the protection scope of this application.

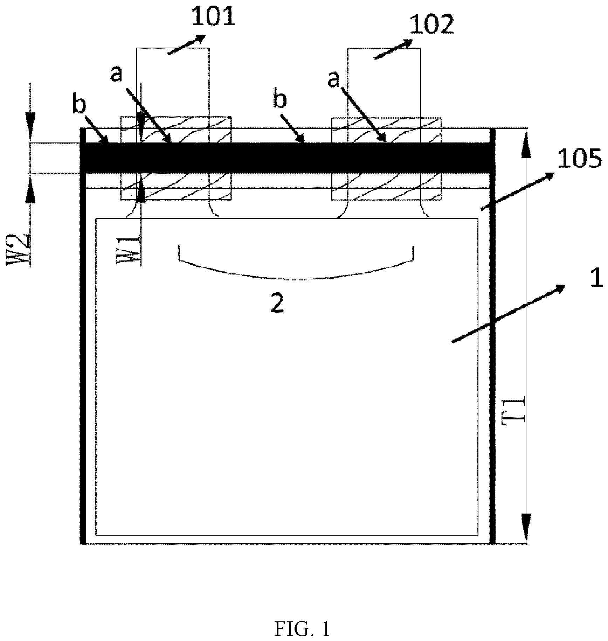

FIG. 1 is a schematic front view of a battery cell according to this application.

As shown in FIG. 1, the battery cell includes a packaging bag 1 and an electrode assembly 2. The packaging bag 1 may contain an electrolyte (not shown in the figure) in its interior, and accommodates the electrode assembly 2. This means that a part (lower part in the figure) of the electrode assembly 2 is located inside the packaging bag 1 and soaked in the electrolyte, and the other part (upper part in the figure) thereof is located outside the packaging bag 1.

Specifically, as shown in FIG. 1, the electrode assembly 2 includes a first tab 101 and a second tab 102 which protrude from the top of the packaging bag 1(according to the orientation given in FIG.1). The top of the packaging bag 1 is a sealing portion (which is therefore also called a top seal), and the sealing portion includes:

first regions a where the first tab 101 and the second tab 102 at least partly protrude from, which therefore may be understood as tab regions of the sealing portion; and

a second region b transversely connected to the first regions a with no tab protruding therefrom, which therefore may be understood as a non-tab region of the sealing portion.

In a word, in this application, the sealing portion (top in FIG. 1) of the packaging bag 1 is composed of tab regions (namely, first regions a) where the first tab 101 and the second tab 102 protrude from and the other region (namely, the non-tab region which is the foregoing second region b). In this application, the tab regions and the non-tab region of the sealing portion of the packaging bag 1 have different packaging strengths.

Specifically, as shown in FIG. 1, a total length of the battery cell is T1. In a length direction of the battery cell, a width of the first regions a is W1, a width of the second region b is W2, a packaging strength of the first regions a is S1, and a packaging strength of the second region b is S2. Then, S1, W1, S2, and W2 satisfy the following relationship:

$$\frac{W2}{W1} \times S1 \leq S2 \leq \frac{W1}{W2} \times 3S1$$

The tab regions a and the non-tab region b of the sealing portion of the battery cell designed based on this relationship have different packaging strengths, and therefore the sealing portion does not have uniform packaging strength in overall. To be specific, the non-tab region b has greater packaging strength than the tab regions a. With such structural parameters, when the battery cell interior swells under high temperature, a region with weaker packaging strength (tab region a) opens earlier than a region with greater packaging strength (non-tab region b) under pneumatic impact of gases inside the battery cell, allowing heat to discharge as quickly as possible from the earlier opening, which greatly improves safety performance of the battery cell under high temperature and reduces the probability of fire, explosion, and other dangers resulting from heat accumulation in the battery cell.

In the embodiment shown in FIG. 1, W1=W2. Then, the foregoing relationship is $S1 \leq S2 \leq 3S1$. In other words, when the tab regions a and the non-tab region b have equal width, the packaging strength S2 of the non-tab region b is greater than or equal to the packaging strength S1 of the tab regions a, but less than or equal to 3 times the packaging strength S1 of the tab regions a of the top seal. In practice, the packaging strengths S1 and S2 of the tab regions a and the non-tab region b can be determined according to the battery cell size, tabs, tab adhesive (the "adhesive layer" described later), and many other factors. For example, optionally $1.2S1 \leq S2 \leq 2.8S1$, $1.5S1 \leq S2 \leq 2.5S1$, $1.8S1 \leq S2 \leq 2.2S1$, or $S2 = 1.3S1$ (detailed in the experimental data given later (Table 1)).

For example, in a specific example, the packaging strength S1 of the tab regions a is $0.5N/m < S1 < 10N/m$, and the packaging strength S2 of the non-tab region b is $1.2S1 \leq S2 \leq 2.8S1$. According to testing, battery cells with the packaging strengths S1 and S2 within such ranges have better safety performance, as their top seals open more easily under high temperature. More preferably, the packaging strength S1 of the tab regions a is $2.0N/m < S1 < 8.0N/m$, and the packaging strength S2 of the non-tab region is $1.5S1 \leq S2 \leq 2.5S1$. For example, in Example 1 given in Table 1, S1=2.9 and S2=7.0. Therefore, $S2 \approx 2.4S1$, in which case battery cells can 100% pass testing with their top seals open after heating for 60 minutes under 140°C. In another example, the packaging strength S1 of the tab regions a is $2.9N/m < S1 < 4.5N/m$, and the packaging strength S2 of the non-tab region b is $1.8S1 \leq S2 \leq 2.2S1$. For example, in Example 3 given in Table 3, S1=3.3 and S2=5.1. Therefore, $S2 \approx 2.16S1$, in which case battery cells can 100% pass testing with their top seals open after heating for 60 minutes under 140°C. In yet another example, the packaging strength S1 of the tab regions a is 3.9N/m, and the packaging strength S2 of the non-tab region (b) is 1.3S1, as in Example 6 given in Table 1, in which case battery cells can 100% pass testing with their top seals open after heating for 60 minutes under 140°C.

In a preferred embodiment of this application, S1 and S2 are within the following numerical ranges: $0.5N/m < S1 < 10N/m$ and $0.8S1 \leq S2 \leq 3.4S1$, and W1 is $1.5mm < W1 < 3.0mm$. A battery cell designed according to such parameter ranges not only helps to make the non-tab region and tab regions of the sealing portion at the cell top have different packaging strengths, but also minimizes loss of energy density of the battery cell.

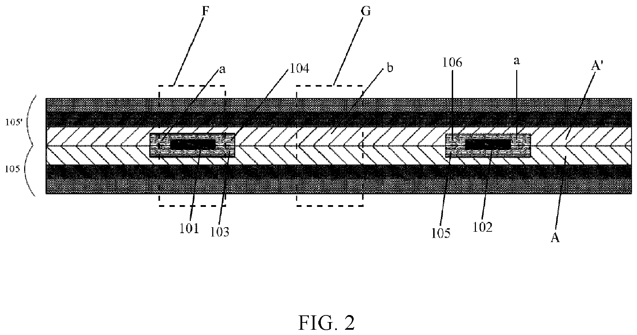

Referring to FIG. 2, FIG. 2 is a schematic top view of the battery cell shown in FIG. 1. As shown in the figure, the packaging bag 1 includes a first packaging film 105 and a second packaging film 105' which are joined to form the packaging bag 1. As shown in the figure, the first packaging film 105 includes a first fusion layer A, and the second packaging film 105' includes a second fusion layer A' disposed opposite to the first fusion layer A, and the first fusion layer A and the second fusion layer A' are sealed together to form the sealing portion and an accommodating space for accommodating the electrode assemblies 1 and 2. A melting point of the first fusion layer is 105°C to 165°C.

As shown in FIG. 2, the electrode assembly 1 or 2 further includes a first adhesive layer 103 opposite to the first fusion layer A and a second adhesive layer 104 opposite to the second fusion layer A'; the first tab 101 is disposed between the first adhesive layer 103 and the second adhesive layer 104, and the first adhesive layer 103 and the second adhesive layer 104 are disposed between the first fusion layer A and the second fusion layer A' to form one first region a where the first tab 101 protrudes from.

Similarly, referring to the right side of FIG. 2, the electrode assembly 1 or 2 further includes a third adhesive layer 105 opposite to the first fusion layer A and a fourth adhesive layer 106 opposite to the second fusion layer A'; the second tab 102 is disposed between the third adhesive layer 105 and the fourth adhesive layer 106, and the third adhesive layer 105 and the fourth adhesive layer 106 are disposed between the first fusion layer A and the second fusion layer A' to form another first region a where the second tab 102 protrudes from.

According to the accompanying drawings, "opposite to" in this application means that two layers are adjacent and in contact with each other, or even bonded together (for example, two layers are bonded by melting). The same applies below.

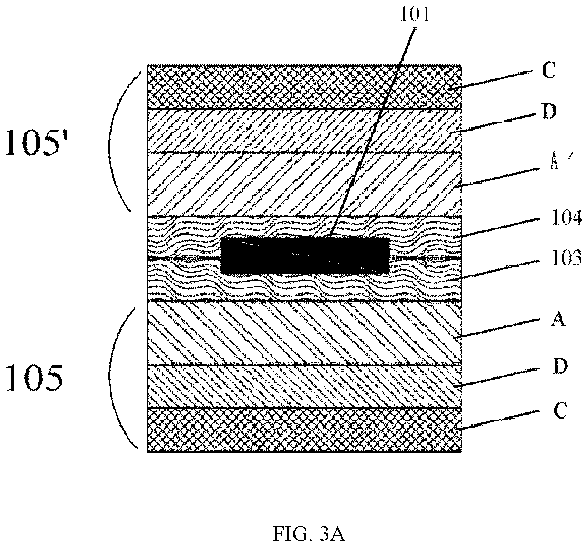

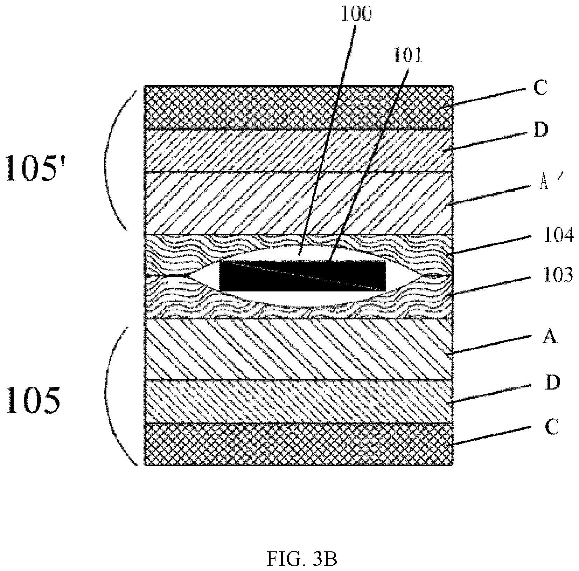

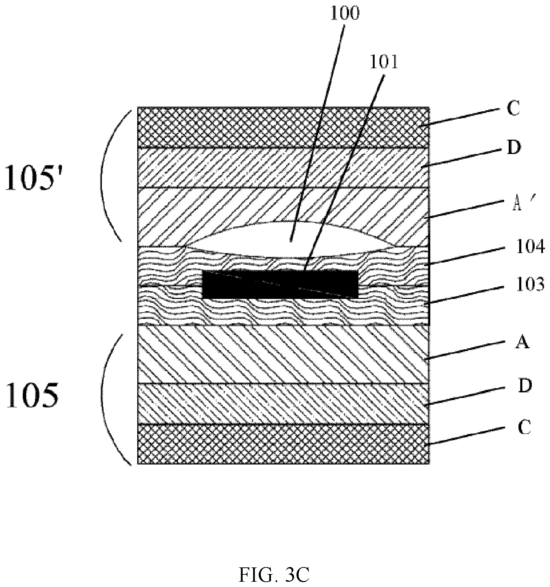

Referring to FIG. 3A, FIG. 3A is a local enlarged view of a position F of the battery cell shown in FIG. 2, illustrating a local structure of the first region a on the left side of FIG. 2. As shown in the figure, the region is not open. When the battery cell is being charged, its temperature rises with the charging, and pressure inside the battery cell (specifically, inside the packaging bag 1) also increases constantly which impacts the sealing portion (the tab regions a and the non-tab region b) of the battery cell. Under the action of this pressure, a tab region a with a weaker packaging strength opens earlier in a way shown in FIG. 3B, where the first adhesive layer 103 and the second adhesive layer 104 are pushed apart by pressure to form an opening 100 between them. Alternatively, the second adhesive layer 104 and the second fusion layer A' are pushed apart by pressure to form an opening 100 between them as shown in FIG. 3C, or the first adhesive layer 103 and the first fusion layer are pushed apart by pressure to form an opening 100 (symmetrical to the shape shown in FIG. 3C, not shown in the figure).

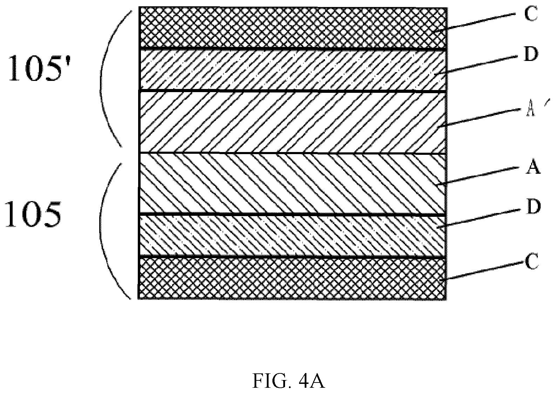

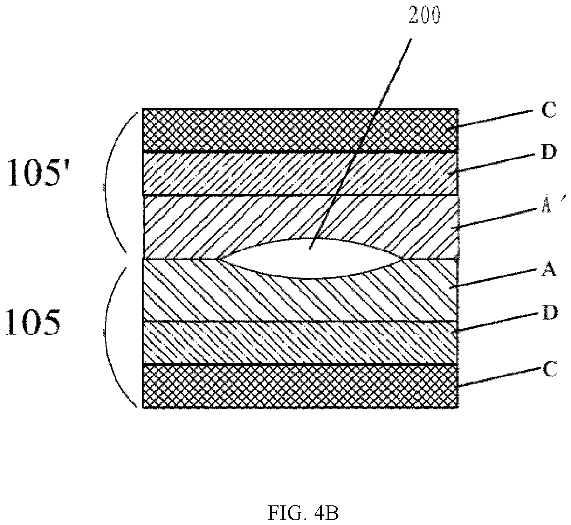

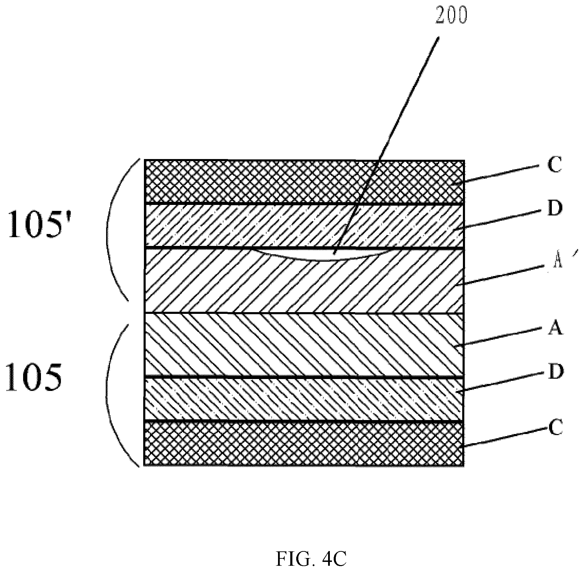

Referring to FIG. 4A, FIG. 4A is a local enlarged view of a position G of the battery cell shown in FIG. 2, illustrating a local structure of the second region b (region where no tab protrudes from) of the sealing portion of the battery cell. As shown in FIG. 4A, the region is not open. When the battery cell is being charged, after the tab region a opens due to high temperature of the battery cell, the continued temperature rise of the battery cell makes the opening of the tab region a insufficient to effectively dissipate heat. In this case, the non-tab region b is also likely to open to form an additional heat dissipation hole. For example, the non-tab region b is likely to open in a way shown in FIG. 4B, where the first fusion layer A and the second fusion layer A' are pushed apart by pressure to form an opening 200, or in a way shown in FIG. 4C, where the second fusion layer A' is pushed by pressure to form an opening 200 at a side close to a metal layer D (detailed below). In this case, heat dissipation openings are formed in both the tab region a and the non-tab region b, meaning that a plurality of heat dissipation openings are formed in the sealing portion of the packaging bag of the battery cell. Obviously, this helps to discharge heat of the battery cell as quickly as possible, thus reducing the risk of fire or explosion of the battery cell due to unexpected overheating.

The following describes structures of the adhesive layers of the tab in detail. In this application, the first adhesive layer, the second adhesive layer, the third adhesive layer, and the fourth adhesive layer may have a same structure and material, or certainly, they may have different structures and materials. The following describes the first adhesive layer as an example.

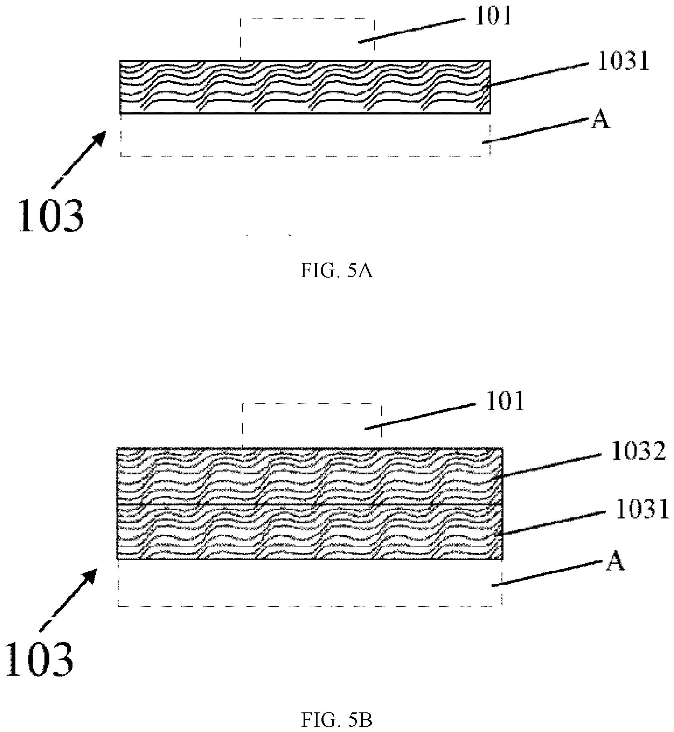

Referring to FIG. 5A, in an embodiment of this application, the first adhesive layer 103 is a single-layer structure 1031 (for example, a hot-pressed sealing material layer may be made of PP (polypropylene) or PPA (polyphthalamide) or CPP (chlorinated polypropylene) or the like), and a melting point of the first adhesive layer 1031 is 100°C to 150°C. Such adhesive layer has a simple structure and is not costly.

Referring to FIG. 5B, in another embodiment of this application, the first adhesive layer 103 is a double-layer structure which includes a first layer 1031 opposite to the first fusion layer A, where a melting point of the first layer 1031 is 100°C to 170°C, and a second layer 1032 opposite to the first tab 101, where a melting point of the second layer 1032 is 105°C to 145°C. In this case, the first layer 1031 and the second layer 1032 are made of different materials, for example, the first layer 1031 is made of polypropylene, and the second layer 1032 is made of polyethylene propylene copolymer. A double-layer tab adhesive is more beneficial to safety performance of a battery cell under high temperature. This is because the second layer 1032 of the double-layer tab adhesive has a lower temperature, and when the battery cell swells under high temperature, an interface between the second layer 1032 of the tab adhesive in the top seal tab region and the first tab 101 is weaker and easier to open than that of a battery cell with a single adhesive layer, thus being beneficial to heat dissipation.

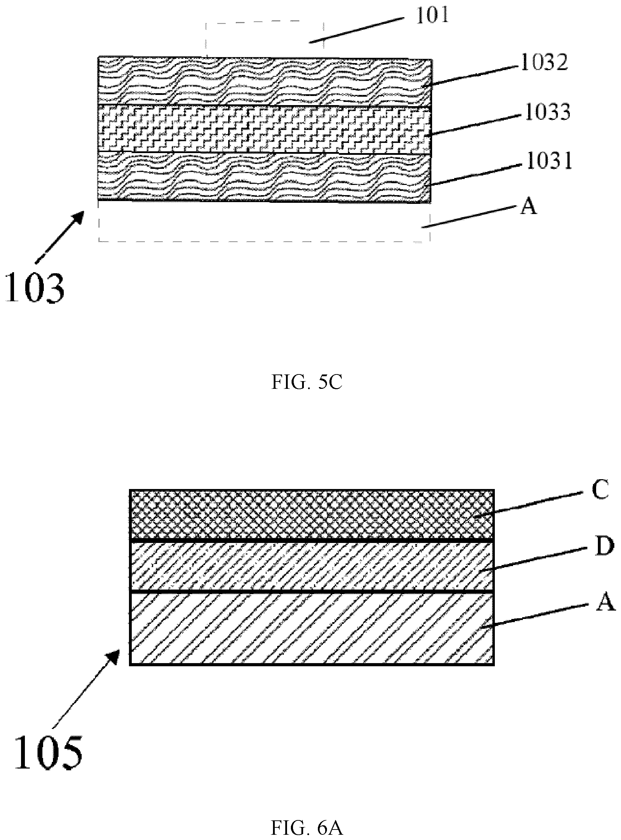

Referring to FIG. 5C, in yet another embodiment of this application, the first adhesive layer 103 includes a first layer 1031 opposite to the first fusion layer A, where a melting point of the first layer 1031 is 100°C to 170°C, a second layer 1032 opposite to the first tab 101, where a melting point of the second layer 1032 is 105°C to 145°C, and a third layer 1033 disposed between the first layer 1031 and the second layer 1032, where a melting point of the third layer 1033 is 200°C to 300°C. In this case, the first layer 1031 and the second layer 1032 may be made of a same material or different materials. The third layer 1033 differs from the first layer 1031 and the second layer 1032 in terms of material, and therefore has a higher melting point than them. Therefore, when the battery cell is to have a heat dissipation opening under high temperature, the second layer 1032 and the first tab 101, or the first layer 1031 and the first fusion layer A, become apart earlier than the third layer 1033 is apart from the first layer 1031 and the second layer 1032. Compared with single-layer and two-layer adhesive structures, a three-layer adhesive structure has higher mechanical strength and hardness because of a higher melting point of an intermediate layer. After hot-pressing packaging, such tab adhesive is less deformed so that the battery cell has better uniformity. In addition, battery cells with a three-layer adhesive structure have longer service life.

In the embodiments, the second adhesive layer, the third adhesive layer, and the fourth adhesive layer may also have any one of the foregoing structures. For example, when the first adhesive layer is a single-layer structure, the second adhesive layer may be a single-layer, double-layer or three-layer structure. Similarly, the third adhesive layer and the fourth adhesive layer may also have different structures.

In this application, the second packaging film 105' may have the same structure as the first packaging film 105. Therefore, the following describes the first packaging film 105 as an example.

Referring to FIGS. 6A-6D, FIGS. 6A-6D are cross-sectional views of the first packaging film 105 in different embodiments. In the embodiment shown in FIG. 6A, the first packaging film 105 is a three-layer structure which includes the first fusion layer A, a barrier material layer C, and a metal layer D clamped between the barrier material layer C and the first fusion layer A. The first fusion layer A implements fusion bonding with the tab adhesive; the metal layer D give the packaging film 105 some rigidity; and the barrier material layer C is used to protect the metal layer D and may be made of an insulating material. Relatively, the packaging film with such structure is less costly.

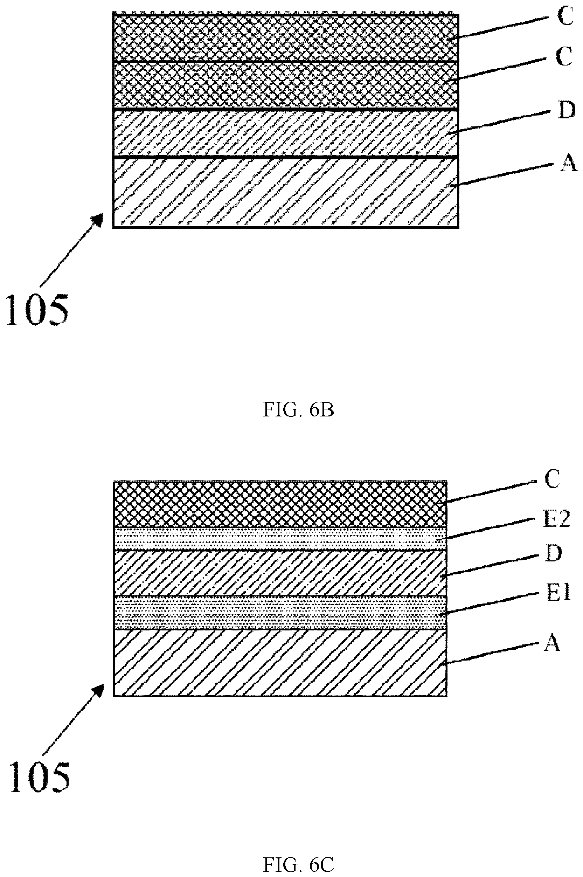

In the embodiment shown in FIG. 6B, the first packaging film 105 is a four-layer structure which includes the first fusion layer A, two barrier material layers that are stacked, and a metal layer D clamped between one of the barrier material layers C and the first fusion layer A. These layers have functions similar to those in the preceding embodiment, and the two barrier material layers C may be made of different materials.

In the embodiment shown in FIG. 6C, the first packaging film 105 is a five-layer structure which includes the first fusion layer A, a first bonding layer E1, a metal layer D, a second bonding layer E2, and a barrier material layer C sequentially from the inside outward. The first fusion layer A and the metal layer D are bonded by the first bonding layer E1, and the metal layer D and the barrier material layer C are bonded by the second bonding layer E1. As two bonding layers are provided, all the layers of the first packaging film 105 are firmly bonded together. Therefore, the first packaging film 105 has good rigidity and sealing performance in overall.

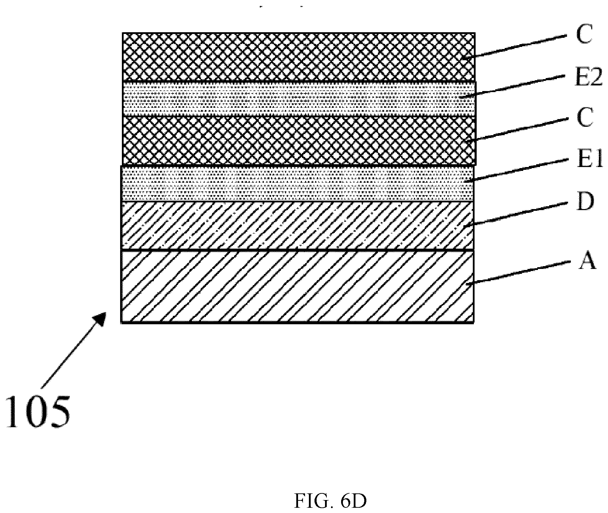

In the embodiment shown in FIG. 6D, the first packaging film 105 is a six-layer structure which includes the first fusion layer A, a metal layer D, a first bonding layer E1, a first barrier material layer C, a second bonding layer E2, and a second barrier material layer C sequentially from the inside outward. In this embodiment, two barrier material layers and two bonding layers are provided, further improving overall sealing performance of the packaging film 105.

A battery provided according to this application contains the foregoing battery cell. The battery cell can reduce risks of fire or explosion during charging of the battery, thereby improving safety performance of the battery.

An electronic device provided according to this application may include a battery and a housing for accommodating the battery, where the battery includes the foregoing battery cell. The battery containing such battery cell can improve safety performance of the electronic device in overall, without affecting its quick-charge performance and other performance.

The following further describes technical effects of the technical solutions of this application with reference to specific experimental data in Table 1.

Table 1 Experimental data and technical effects of Comparative Examples **1-2** and Examples **1-8**

| No. | W1 | S1 | S2 | Melting point of positive-electrode tab adhesive | Melting point of negative-electrode tab adhesive | Melting point of fusion layer | 60 min heating under 130°C | 60 min heating under 140°C | 60 min heating under 150°C | Comparative effect |
|---|---|---|---|---|---|---|---|---|---|---|
| Comparative Example 1 | 1.2 | 3.9 | 4.5 | 161 | 160 | 163 | 5/5 pass | 2/5 pass | 0/5 pass | After heating for 60 min under 130°C, the battery cells swelled but their top seals did not open. After heating for 60 min under 140°C, approximately 50% of the battery cells caught fire and failed and their top seals did not open. |
| Comparative Example 2 | 1.1 | 1.9 | 4.7 | 160 | 160 | 162 | 515 pass | 3/5 pass | 0/5 pass | After heating for 60 min under 130°C, the battery cells swelled but their top seals did not open. After heating for 60 min under 140°C, approximately 50% of the battery cells caught fire and failed and their top seals did not open. |
| Example 1 | 2.1 | 2.9 | 7.0 | 138 | 138 | 162 | 5/5 pass | 5/5 pass | 115 pass | Compared with the comparative examples, the battery cells 100% passed the test with their top seals open after heating for 60 min under 140°C. |
| Example 2 | 1.8 | 3.3 | 5.1 | 138 | 138 | 163 | 5/5 pass | 5/5 pass | 0/5 pass | Compared with the comparative examples, the battery cells 100% passed the test with their top seals open after heating for 60 min under 140°C. |
| Example 3 | 2.0 | 3.1 | 6.7 | 138 | 138 | 161 | 5/5 pass | 5/5 pass | 0/5 pass | Compared with the comparative examples, the battery cells 100% passed the test with their top seals open after heating for 60 min under 140°C. |
| Example 4 | 1.7 | 3.5 | 5.5 | 139 | 138 | 162 | 5/5 pass | 5/5 pass | 0/5 pass | Compared with the comparative examples, the battery cells 100% passed the test with their top seals open after heating for 60 min under 140°C. |
| Example 5 | 1.7 | 2.7 | 5.7 | 138 | 138 | 162 | 5/5 pass | 5/5 pass | 0/5 pass | Compared with the comparative examples, the battery cells 100% passed the test with their top seals open after heating for 60 min under 140°C. |
| Example 6 | 1.5 | 3.9 | 5.1 | 138 | 140 | 162 | 5/5 pass | 5/5 pass | 0/5 pass | Compared with the comparative examples, the battery cells 100% passed the test with their top seals open after heating for 60 min under 140°C. |

| No. | W1 | S1 | S2 | Melting point of positive-electrode tab adhesive | Melting point of negative-electrode tab adhesive | Melting point of fusion layer | 60 min heating under 130°C | 60 min heating under 140°C | 60 min heating under 150°C | Comparative effect |
|---|---|---|---|---|---|---|---|---|---|---|
| Example 7 | 2.2 | 4.2 | 7.3 | 135 | 134 | 163 | 5/5 pass | 5/5 pass | 2/5 pass | Compared with the comparative examples, the battery cells 100% passed the test with their top seals open after heating for 60 min under 140°C; and some of the battery cells passed the test with their top seals open after heating for 60 min under 150°C. |
| Example 8 | 2.5 | 3.5 | 8.2 | 138 | 135 | 162 | 5/5 pass | 5/5 pass | 4/5 pass | Compared with the comparative examples, the battery cells 100% passed the test with their top seals open after heating for 60 min under 140°C; and some of the battery cells passed the test with their top seals open after heating for 60 min under 150°C. |

In Table1, W2=W1, the value of W1 is measured through CT (Computed Tomography), and the unit of which is mm; S1 is measured by Tensile Testing Machine, the unit of which is N/m, and the same as S2; the melting point is measured by DSC (Differential Scanning Calorimeter), the unit of which is °C. According to Table 1, in Comparative Example 1, after heating for 60 minutes under 130°C, the battery cells swelled as expected but their top seals did not open; and after heating for 60 minutes under 140°C, approximately 50% of the battery cells caught a fire and failed and their top seals did not open. The test failed.

By contrast, after heating for 60 minutes under 140°C, the battery cells provided in Examples 1 to 8 100% passed the test (to be specific, the top seals of the cells opened, and the battery cells did not catch fire or explode, considered as being not failed). For Examples 7 and 8, after heating for 60 minutes under 150°C, there were still some battery cells passing the test. In Examples 1 to 8, the relationships between S1 and S2 are approximately S2=2.41S1, S2=1.54S1, S2=2.16S1, S2=1.57S1, S2=2.11S1, S2=1.31S1, S2=1.74S1, and S2=2.34S1, respectively. Therefore, the battery cells provided according to this application have greatly improved safety performance under high temperature.

Finally, in specific design and manufacture of battery cells, the following two aspects may be combined to make a non-tab region and a tab region have different packaging strengths:

(1) Increase packaging strength of the non-tab region b of the battery cell, for example, by increasing a width W2 of that region. The non-tab region of the battery cell is sealed by fusing two hot-pressed sealing material layers (the above-mentioned "fusion layers") under high temperature, and the packaging strength of the sealed non-tab region is mainly affected by width of the sealing region when packaging equipment and temperature are unchanged. At present, battery cells of conventional consumer secondary batteries have a length T1 in the range of 10mm<T1<200mm, and a top sealing region width in the range 1.5mm<W1<3.0mm, which helps to implement packaging with non-uniform strength and reduces as much loss of energy density as possible.

(2) Weaken packaging strength of the tab regions a of the battery cell, for example, by using a sealing material with a relatively low melting point. For example, a tab adhesive may be selected from those having a test melting point within 100°C to 170°C or even 105°C to 145°C, provided that this is implemented for one of a positive-electrode tab and a negative-electrode tab. In addition, sealing of the tab region a is to seal the tab and the packaging film together. Therefore, the high-temperature packaging strength of the tab region a can alternatively be weakened by reducing a melting point of the hot-pressed sealing material (the above-mentioned fusion layer) of the packaging film, where a material with a melting point within 105°C to 165°C is preferably used.

As used in this application, for ease of description, spatial relation terms such as "under", "below", "lower part", "above", "upper part", "lower part", "left side", "right side", and the like are used in this application to describe the relationship between one component or feature and another component or feature as illustrated in the figures. In addition to orientations depicted in the figures, the spatial relation terms are intended to cover different orientations of devices in use or operation. The devices can be oriented in other ways (rotated by 90 degrees or in other orientations), and spatial relation descriptors used in this application can also be explained accordingly. It should be understood that when ove component is referred to as being "connected" or "coupled" to another component, it may be connected or coupled to the another component directly or via an intermediate component.

In this application, the term "approximately" generally means being within ±10%, ±5%, ±1% or ±0.5% of a given value or range. In this application, a range may be from one endpoint to another endpoint or between two endpoints. Unless otherwise specified, all ranges disclosed in this application are inclusive of endpoints.

Features of some embodiments and details of this application have been described above. A person skilled in the art can make various alternations, replacements, and changes, without departing from the spirit and scope of this application. All such equivalent structures fall within the protection of this application.

## Claims

1. A battery cell, comprising: an electrode assembly and a packaging bag (1) accommodating the electrode assembly; wherein the packaging bag (1) comprises a sealing portion; and the electrode assembly comprises a first tab (101) and a second tab (102); **characterized in that**, the sealing portion comprises:

first regions (a), wherein the first tab (101) and the second tab (102) at least partly protrude from the first regions (a), a packaging strength of the first regions (a) is S 1, and a width of the first regions is W1 in a length direction of the battery cell; and
a second region (b) connected to the first regions (a), wherein a packaging strength of the second region (b) is S2, and a width of the second region (b) is W2 in the length direction of the battery cell;
wherein S 1, W1, S2, and W2 satisfy the following relationship:

$$\frac{W2}{W1} \times S1 \leq S2 \leq \frac{W1}{W2} \times 3S1.$$

2. The battery cell according to claim 1, **characterized in that**, 0.5N/m<S1<10N/m, 0.8S1≤S2≤3.4S1.

3. The battery cell according to claim 1, **characterized in that**, 1.5mm<Wl<3.0mm.

4. The battery cell according to claim 1, **characterized in that**, the packaging bag (1) comprises a first packaging film (105) and a second packaging film (105'), wherein the first packaging film (105) comprises a first fusion layer (A), and the second packaging film (105') comprises a second fusion layer (A') disposed opposite to the first fusion layer (A), and the first fusion layer (A) and the second fusion layer (A') are sealed together to form the sealing portion and an accommodating space for accommodating the electrode assembly; and
the electrode assembly further comprises a first adhesive layer (103) opposite to the first fusion layer (A) and a second adhesive layer (104) opposite to the second fusion layer (A'); and the first tab (101) is disposed between the first adhesive layer (103) and the second adhesive layer (104), and the first adhesive layer (103) and the second adhesive layer (104) are disposed between the first fusion layer (A) and the second fusion layer (A') to form the first regions (a) where the first tab (101) protrudes from.

5. The battery cell according to claim 4, **characterized in that**, the first adhesive layer (103) is a single-layer structure (1031), wherein a melting point of the first adhesive layer (103) is 100°C to 150°C.

6. The battery cell according to claim 4, **characterized in that**, the first adhesive layer (103) comprises:

   a first layer (1031) opposite to the first fusion layer (A), wherein a melting point of the first layer (1031) is 100°C to 170°C, and
   a second layer (1032) opposite to the first tab (101), wherein a melting point of the second layer (1032) is 105°C to 145°C.

7. The battery cell according to claim 4, **characterized in that**, the first adhesive layer (103) comprises:

   a first layer (1031) opposite to the first fusion layer (A), wherein a melting point of the first layer is 100°C to 170°C;
   a second layer (1032) opposite to the first tab (101), wherein a melting point of the second layer is 105°C to 145°C; and
   a third layer (1033) disposed between the first layer (1031) and the second layer (1032), wherein a melting point of the third layer (1033) is 200°C to 300°C.

8. The battery cell according to claim 4, **characterized in that**, a melting point of the first fusion layer (A) is 105°C to 165°C.

9. A battery, **characterized by** comprising the battery cell according to any one of claims 1 to 8.

10. An electronic device, **characterized by** comprising a battery and a housing for accommodating the battery, wherein the battery comprises the battery cell according to any one of claims 1 to 8.

FIG. 1

FIG. 2

FIG. 3A

FIG. 3B

FIG. 3C

FIG. 4A

FIG. 4B

200

105'

105

C

D

A´

A

D

C

FIG. 4C

FIG. 5A

FIG. 5B

101

1032

1033

1031

A

103

FIG. 5C

C

D

A

105

FIG. 6A

C

C

D

A

105

FIG. 6B

C

E2

D

E1

A

105

FIG. 6C

C

E2

C

E1

D

A

105

FIG. 6D

## INTERNATIONAL SEARCH REPORT

| International application No. |
| --- |
| **PCT/CN2020/082540** |

### A. CLASSIFICATION OF SUBJECT MATTER

H01M 2/02(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电芯, 电极组件, 极耳, 第一, 第二, 封装, 强度, 宽度, cell, electrode assembly, lug, first, second, seal, strength, width

### C. DOCUMENTS CONSIDERED TO BE RELEVANT

| Category* | Citation of document, with indication, where appropriate, of the relevant passages | Relevant to claim No. |
| --- | --- | --- |
| X | CN 108123176 A (SHENZHEN GRAND POWERSOURCE CO., LTD.) 05 June 2018 (2018-06-05)<br>description, paragraphs 2-15, figure 1 | 1-3, 9, 10 |
| Y | CN 108123176 A (SHENZHEN GRAND POWERSOURCE CO., LTD.) 05 June 2018 (2018-06-05)<br>description, paragraphs 2-15, figure 1 | 4-8 |
| Y | CN 206480713 U (NINGDE AMPEREX TECHNOLOGY LTD.) 08 September 2017 (2017-09-08)<br>description, paragraphs 60-105, and figures 1-9 | 4-8 |
| Y | CN 110391356 A (NINGDE AMPEREX TECHNOLOGY LTD.) 29 October 2019 (2019-10-29)<br>description, paragraphs 57-103, and figures 1-15 | 4-8 |
| Y | JP 2014120390 A (OKURA INDUSTRIAL CO LTD) 30 June 2014 (2014-06-30)<br>description, paragraphs 11-25, and figures 1-4 | 4-8 |
| A | CN 107785617 A (SHANGHAI ZIJIANG NEW MATERIAL TECHNOLOGY CO., LTD.) 09 March 2018 (2018-03-09)<br>entire document | 1-10 |

☑ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 December 2020** | **29 December 2020** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/082540** |

**C.      DOCUMENTS CONSIDERED TO BE RELEVANT**

| Category* | Citation of document, with indication, where appropriate, of the relevant passages | Relevant to claim No. |
|---|---|---|
| A | JP 2017069218 A (YUKA DENSHI CO LTD) 06 April 2017 (2017-04-06)<br>entire document | 1-10 |

Form PCT/ISA/210 (second sheet) (January 2015)

**INTERNATIONAL SEARCH REPORT**
Information on patent family members

International application No.

**PCT/CN2020/082540**

| Patent document cited in search report | | | Publication date (day/month/year) | Patent family member(s) | | | Publication date (day/month/year) |
|---|---|---|---|---|---|---|---|
| CN | 108123176 | A | 05 June 2018 | None | | | |
| CN | 206480713 | U | 08 September 2017 | None | | | |
| CN | 110391356 | A | 29 October 2019 | None | | | |
| JP | 2014120390 | A | 30 June 2014 | JP | 6055300 | B2 | 27 December 2016 |
| CN | 107785617 | A | 09 March 2018 | None | | | |
| JP | 2017069218 | A | 06 April 2017 | None | | | |

Form PCT/ISA/210 (patent family annex) (January 2015)